# EUROPEAN PATENT APPLICATION

(11) **EP 4 591 968 A1**
(43) Date of publication of application: **30.07.2025**
(21) Application number: 24179875.0
(22) Date of filing: 04.06.2024
(51) Int. Cl.: B01D 53/14

(54) **CARBON DIOXIDE CAPTURING SYSTEM, CARBON DIOXIDE CAPTURING METHOD, AND CARBON DIOXIDE CAPTURING PROGRAM**

(30) Priority: 24.01.2024 JP 2024009005
(71) Applicant: Kabushiki Kaisha Toshiba, Tokyo 105-0023 (JP); Toshiba Energy Systems & Solutions Corporation, Saiwai-ku Kawasaki-shi Kanagawa (JP)
(72) Inventor: MORIGAKI, Hayato, Kawasaki-shi, Kanagawa (JP); FUJITA, Koshito, Kawasaki-shi, Kanagawa (JP); KATO, Yasuhiro, Kawasaki-shi, Kanagawa (JP); SHIBASAKI, Osamu, Kawasaki-shi, Kanagawa (JP); MURAOKA, Daigo, Kawasaki-shi, Kanagawa (JP); MURAI, Shinji, Kawasaki-shi, Kanagawa (JP); TACHIHARA, Wataru, Kawasaki-shi, Kanagawa (JP); MAO, Mengchieh, Kawasaki-shi, Kanagawa (JP); TAKADA, Noriko, Kawasaki-shi, Kanagawa (JP)
(74) Representative: Hoffmann Eitle

(57) **Abstract**

In one embodiment, a carbon dioxide capturing system includes an absorber configured to bring a treatment object gas including carbon dioxide and an absorption liquid including an amine-based compound into contact with each other, and cause the absorption liquid to absorb the carbon dioxide, and a regenerator configured to heat the absorption liquid having absorbed the carbon dioxide, and cause the carbon dioxide to be released from the absorption liquid. The system further includes measuring apparatuses for measuring two or more of pH, electrical conductivity, and carbon dioxide concentration of the absorption liquid in a carbon dioxide capturing apparatus that includes the absorber and the regenerator. The system further includes an absorption liquid refining apparatus for refining the absorption liquid, and an information processing apparatus for controlling the absorption liquid refining apparatus, based on two or more of the pH, the conductivity, and the concentration.

## Description

### FIELD

Embodiments described herein relate to a carbon dioxide capturing system, a carbon dioxide capturing method, and a carbon dioxide capturing program.

### BACKGROUND

To achieve the "2°C target" and "1.5°C aspirational target" regarding the limiting temperature increase mentioned in the Paris Agreement, each nation is required to accelerate climate change measures. Among these measures, carbon dioxide capture, utilization and storage (CCUS) is largely expected with hydrogen, renewable energy and the like, as measures for reducing emissions of carbon dioxide (CO₂) that has a strong greenhouse effect.

One method of capturing CO₂ is chemical absorption. In the chemical absorption, CO₂-containing exhaust gas (hereinafter, referred to as "exhaust gas") discharged from a thermal power plant, ironworks or the like is brought into contact with an absorption liquid to cause the absorption liquid to absorb the CO₂ in the exhaust gas. An example of the absorption liquid is an aqueous solution that contains an amino group containing compound (hereinafter, referred to as an "amine-based compound"). In a carbon dioxide capturing apparatus that adopts the chemical absorption, CO₂ is captured from exhaust gas by using an absorption liquid, which is repetitively circulated between an absorber that causes the absorption liquid to absorb CO₂ and a regenerator that causes CO₂ to be released from the absorption liquid.

However, when the absorption liquid absorbs the CO₂, an acid such as nitrogen oxide (NOₓ), sulfur oxide (SOₓ), carbonyl sulfide, hydrogen cyanide, thiocyanic acid, or thiosulfuric acid in the exhaust gas reacts with the amine-based compound in the absorption liquid, and thereby an impurity called a heat-stable amine salt (HSAS) is generated. In addition, due to heating for releasing the CO₂ from the absorption liquid, or a reaction between oxygen in the exhaust gas and the amine-based compound, the amine-based compound may be decomposed or become denatured, and thereby generation of the heat-stable amine salt may be promoted. Accumulation of the heat-stable amine salt in the absorption liquid not only lowers CO₂ absorption efficiency of the absorption liquid, but also causes corrosion of the carbon dioxide capturing apparatus. Accordingly, the heat-stable amine salt is desirably removed from the absorption liquid.

### BRIEF DESCRIPTION OF THE DRAWINGS

FIG. 1 is a schematic view illustrating a configuration of a carbon dioxide capturing apparatus 1 of a first embodiment;
FIG. 2 is a block diagram illustrating a configuration of a carbon dioxide capturing system of the first embodiment;
FIG. 3 is a block diagram illustrating a configuration of a carbon dioxide capturing system of a second embodiment; and
FIG. 4 is a block diagram illustrating a configuration of a carbon dioxide capturing system of a third embodiment.

### DETAILED DESCRIPTION

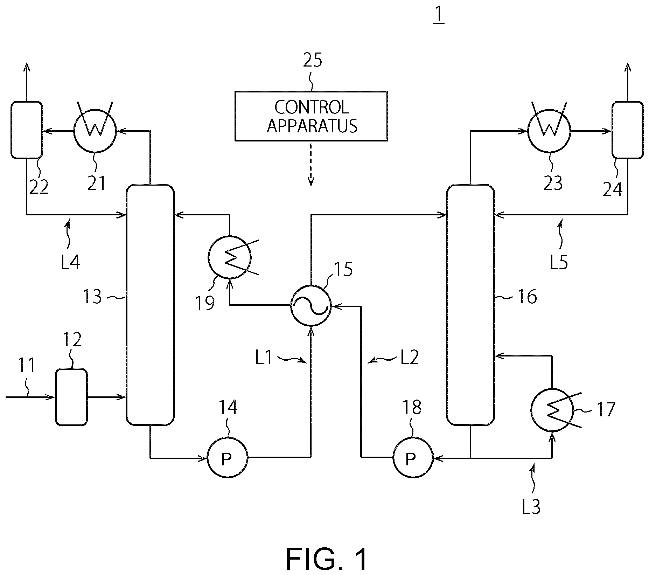

Embodiments will now be explained with reference to the accompanying drawings. In FIGS. 1 to 4, same components will be denoted by same reference signs and redundant descriptions will be omitted.

For example, inorganic acids caused from the exhaust gas, or organic acids caused from the decomposition of the amine-based compound accumulate in the absorption liquid in the carbon dioxide capturing apparatus. An absorption liquid refining apparatus is an example of an apparatus that removes an acid component that may construct the heat-stable amine salt from the absorption liquid. A period during which an operation of the absorption liquid refining apparatus is started is determined based on, for example, concentration of the acid component in the absorption liquid. Ion chromatography is widely used as a method of measuring the concentration of the acid component in the absorption liquid.

However, due to theoretical constraints of the ion chromatography and configurational constraints of apparatuses for the ion chromatography, processing of measuring the concentration of the acid component in the absorption liquid with the ion chromatography is rarely performed as online measurement, and is often performed as offline measurement. In online measurement, the concentration of the acid component in the absorption liquid is measured in a situation where the absorption liquid is being used in the carbon dioxide capturing apparatus, such as measuring the concentration of the acid component in the absorption liquid flowing through an absorption liquid pipe in the carbon dioxide capturing apparatus. On the other hand, in offline measurement, the concentration of the acid component in the absorption liquid is measured in a situation where the absorption liquid is not being used in a carbon dioxide capturing apparatus, such as collecting the absorption liquid from the carbon dioxide capturing apparatus and measuring the concentration of the acid component in the collected absorption liquid in a chemical laboratory.

Therefore, when measuring the concentration of the acid component in the absorption liquid by offline measurement using the ion chromatography, it is difficult to immediately determine whether or not the absorption liquid refining apparatus needs to be operated unless the measurement is done in an environment where the ion chromatography can be readily used. For example, when the chemical laboratory is not installed near the carbon dioxide capturing apparatus, it takes a long time to perform the offline measurement, and therefore it takes a long time to determine whether or not the absorption liquid refining apparatus needs to be operated.

In one embodiment, a carbon dioxide capturing system includes an absorber configured to bring a treatment object gas including carbon dioxide and an absorption liquid including an amine-based compound into contact with each other, and cause the absorption liquid to absorb the carbon dioxide, and a regenerator configured to heat the absorption liquid having absorbed the carbon dioxide, and cause the carbon dioxide to be released from the absorption liquid. The system further includes a plurality of measuring apparatuses provided in a carbon dioxide capturing apparatus including the absorber and the regenerator, the plurality of measuring apparatuses including two or more of a pH measuring apparatus, an electrical conductivity measuring apparatus, and a concentration measuring apparatus that respectively configured to measure pH, electrical conductivity, and carbon dioxide concentration of the absorption liquid in the carbon dioxide capturing apparatus. The system further includes an absorption liquid refining apparatus configured to refine the absorption liquid introduced from the carbon dioxide capturing apparatus, and feed the refined absorption liquid to the carbon dioxide capturing apparatus, and an information processing apparatus configured to control the absorption liquid refining apparatus, based on two or more of the pH, the electrical conductivity, and the carbon dioxide concentration.

### (First embodiment)

FIG. 1 is a schematic view illustrating a configuration of a carbon dioxide capturing apparatus 1 of a first embodiment.

As illustrated in FIG. 1, the carbon dioxide capturing apparatus 1 of the present embodiment includes an exhaust gas line 11, an oxygen remover 12, an absorber (absorbing tower) 13, an absorption liquid (rich liquid) pump 14, a regenerative heat exchanger 15, a regenerator (regenerating tower) 16, a reboiler 17, an absorption liquid (lean liquid) pump 18, a lean liquid cooler 19, a cooler 21, a gas-liquid separator 22, a cooler 23, a gas-liquid separator 24 and a control apparatus 25. The carbon dioxide capturing apparatus 1 of the present embodiment further includes flow paths L1 to L5 for circulating various fluids.

The exhaust gas line 11 feeds exhaust gas containing carbon dioxide to the carbon dioxide capturing apparatus 1 of the present embodiment from a facility such as a thermal power plant, ironworks, or a cement factory. The exhaust gas in the exhaust gas line 11 is fed to the absorber 13 via the oxygen remover 12. The exhaust gas is an example of the treatment object gas.

The oxygen remover 12 is arranged on the exhaust gas line 11 and removes oxygen from the exhaust gas introduced into the oxygen remover 12 from the exhaust gas line 11. The exhaust gas from which oxygen has been removed by the oxygen remover 12 is introduced into the absorber 13 via the exhaust gas line 11.

The absorber 13 brings the exhaust gas and an absorption liquid (lean liquid) into contact with each other and causes the absorption liquid to absorb the carbon dioxide in the exhaust gas. The absorber 13 discharges the absorption liquid (rich liquid) having absorbed the carbon dioxide from a bottom part of the absorber 13. On the other hand, an absorber exhaust gas containing the exhaust gas from which carbon dioxide has been removed is discharged from a top part of the absorber 13. An example of the absorption liquid is a solution (amine-based solution) containing an amine-based compound.

The rich liquid pump 14 feeds the absorption liquid discharged from the absorber 13 to the regenerator 16 via the regenerative heat exchanger 15. In doing so, the regenerative heat exchanger 15 performs a heat exchange between the absorption liquid that flows from the absorber 13 toward the regenerator 16 and the absorption liquid that flows from the regenerator 16 toward the absorber 13. The absorption liquid that flows from the absorber 13 toward the regenerator 16 flows through the flow path L1 (rich liquid line) and the absorption liquid that flows from the regenerator 16 toward the absorber 13 flows through the flow path L2 (lean liquid line).

The regenerator 16 heats the absorption liquid (rich liquid) supplied from the absorber 13 and causes carbon dioxide and water vapor to be released from the absorption liquid. The regenerator 16 discharges the absorption liquid (lean liquid) having released the carbon dioxide from a bottom part of the regenerator 16. On the other hand, a regenerator exhaust gas containing the released carbon dioxide and water vapor is discharged from a top part of the regenerator 16.

The reboiler 17 takes in a part of the absorption liquid discharged from the regenerator 16 and heats the taken-in absorption liquid. As a result, carbon dioxide and water vapor are released from the absorption liquid. The released carbon dioxide and water vapor are returned to the regenerator 16 together with the absorption liquid and come into contact with the absorption liquid in the regenerator 16. As a result, the absorption liquid in the regenerator 16 is heated and carbon dioxide and water vapor are released from the absorption liquid in the regenerator 16. In this manner, the absorption liquid introduced into the regenerator 16 from the absorber 13 is regenerated in the regenerator 16. The reboiler 17 is provided on the flow path L3 (branched line) that is oriented from the flow path L2 toward the regenerator 16.

The lean liquid pump 18 feeds another part of the absorption liquid discharged from the regenerator 16 to the absorber 13 via the regenerative heat exchanger 15 and the lean liquid cooler 19. In doing so, the regenerative heat exchanger 15 performs a heat exchange between the absorption liquid that flows from the regenerator 16 toward the absorber 13 and the absorption liquid that flows from the absorber 13 toward the regenerator 16. Furthermore, the lean liquid cooler 19 cools the absorption liquid that flows from the regenerator 16 toward the absorber 13 and supplies the absorber 13 with the cooled absorption liquid. In this manner, the absorption liquid circulates between the absorber 13 and the regenerator 16.

The cooler 21 cools the absorber exhaust gas discharged from the absorber 13. As a result, water vapor contained in the absorber exhaust gas is condensed and changes into condensed water. The gas-liquid separator 22 separates the condensed water from the absorber exhaust gas and returns the separated condensed water to the absorber 13. The absorber exhaust gas that is discharged from the gas-liquid separator 22 is treated gas having exhaust gas from which carbon dioxide has been removed as a principal component and is released to the atmosphere. The cooler 21 and the gas-liquid separator 22 are provided on the flow path L4 that is oriented from the top part of the absorber 13 toward a side part near the top part of the absorber 13.

The cooler 23 cools the regenerator exhaust gas discharged from the regenerator 16. As a result, water vapor contained in the regenerator exhaust gas is condensed and changes into condensed water. The gas-liquid separator 24 separates the condensed water from the regenerator exhaust gas and returns the separated condensed water to the regenerator 16. The regenerator exhaust gas that is discharged from the gas-liquid separator 24 is captured gas having the carbon dioxide captured from the exhaust gas as a principal component. The cooler 23 and the gas-liquid separator 24 are provided on the flow path L5 that is oriented from the top part of the regenerator 16 toward a side part near the top part of the regenerator 16.

The control apparatus 25 controls various operations of the carbon dioxide capturing apparatus 1 of the present embodiment. An example of the control apparatus 25 is an information processing apparatus such as a computer or a control panel. For example, the control apparatus 25 controls absorption of carbon dioxide in the absorber 13, release of carbon dioxide in the regenerator 16, feeding by the rich liquid pump 14 and the lean liquid pump 18, and the like.

The carbon dioxide capturing apparatus 1 of the present embodiment may have a configuration that differs from the configuration illustrated in FIG. 1. For example, the carbon dioxide capturing apparatus 1 of the present embodiment may further include components not illustrated in FIG. 1 or may not include a part of the components illustrated in FIG. 1.

Next, further details of the exhaust gas (treatment object gas) and the absorption liquid of the present embodiment will be described.

The exhaust gas of the present embodiment is, for example, a combustion exhaust gas that is discharged from a boiler or a gas turbine of a thermal power plant, a process exhaust gas that is generated at ironworks, or a combustion exhaust gas generated at a sewage disposal facility. The carbon dioxide capturing apparatus 1 of the present embodiment may treat treatment object gases other than an exhaust gas. The treatment object gas is desirably cooled by a cooler, further subjected to treatment such as desulfurization and denitration, and subsequently supplied to the carbon dioxide capturing apparatus 1 of the present embodiment.

When the absorption liquid absorbs CO₂ in the treatment object gas, an organic acid and a heat-stable amine salt accumulate in the absorption liquid. The organic acid is generated by, for example, a reaction between oxygen contained in the treatment object gas and the absorption liquid. The heat-stable amine salt is generated by, for example, a reaction between an inorganic acid such as SOₓ, NOₓ, carbonyl sulfide, hydrogen cyanide, thiocyanic acid, or thiosulfuric acid that is contained in the treatment object gas and an amine-based compound. As a representative example, reaction formulae of a heat-stable amine salt generated by a reaction between alkanolamine and SO₂ are represented by expressions (1) to (5), where R denotes hydrogen or an alkyl group (a hetero ring is formed in some cases).

SO₂ + H₂O = H₂SO₃ (1)

H₂SO₃ + 1/2 O₂ = H₂SO₄ (2)

H₂SO₃ + 2RNHCHR'CH₂OH = [RNH₂CHR'CH₂OH]₂SO₃ (3)

[RNH₂CHR'CH₂OH]₂SO₃ + 1/2 O₂ = [RNH₂CHR'CH₂OH]₂SO₄ (4)

H₂SO₄ + 2RNHCHR'CH₂OH = [RNH₂CHR'CH₂OH]₂SO₄ (5)

The absorption liquid is preferably an amine-based solution containing an amine-based compound or some amine-based compounds (hereinafter, referred to as an "amine") and water. Examples of amine include "primary amines" such as monoethanolamine and 2-amino-2-methyl-1-propanol, "secondary amines" such as diethanolamine and 2-methylaminoethanol, "tertiary amines" such as triethanolamine and N-methyldiethanolamine, "polyethylene polyamines" such as ethylenediamine, triethylenediamine, and diethylene triamine, "cyclic amines" such as piperazines, piperidines, and pyrrolidines, "polyamines" such as xylylene diamine, and "amino acids" such as methylamino carboxylic acid. The absorption liquid may independently contain only one of these amines or may contain a mixture of two or more of these amines. The absorption liquid is, for example, an aqueous solution containing 10 to 70 wt.% of amine.

The absorption liquid may contain a reaction accelerator for promoting a chemical reaction. In addition, the absorption liquid may contain a nitrogen-containing compound for improving absorption performance of an acid gas such as CO₂ gas. The absorption liquid may also contain a corrosion inhibitor for preventing corrosion of the carbon dioxide capturing apparatus 1. The absorption liquid may also contain an antifoam agent for preventing foaming of the absorption liquid, an antioxidant for preventing deterioration of the absorption liquid, or a pH adjuster for adjusting pH of the absorption liquid. The absorption liquid may contain, in any proportion, a compound such as the reaction accelerator, the nitrogen-containing compound, the corrosion inhibitor, the antifoam agent, the antioxidant, or the pH adjuster in a range where efficacy of the absorption liquid is not undermined.

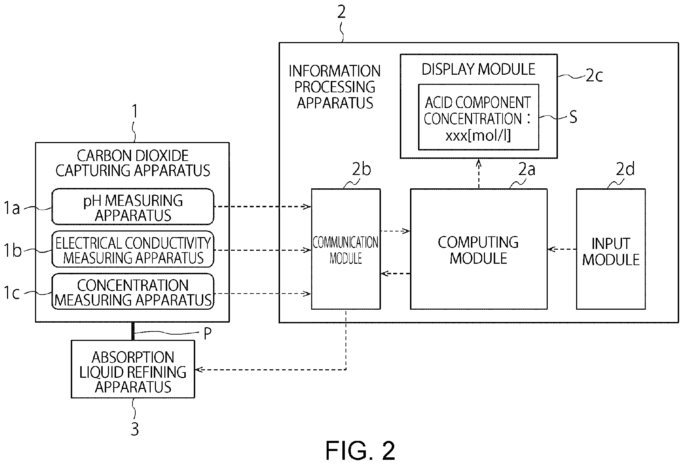

FIG. 2 is a block diagram illustrating a configuration of a carbon dioxide capturing system of the first embodiment.

The carbon dioxide capturing system of the present embodiment includes the carbon dioxide capturing apparatus 1 illustrated in FIG. 1. The carbon dioxide capturing system of the present embodiment further includes an information processing apparatus 2 and an absorption liquid refining apparatus 3.

### [Carbon dioxide capturing apparatus 1]

In addition to the components illustrated in FIG. 1, the carbon dioxide capturing apparatus 1 illustrated in FIG. 2 includes a pH measuring apparatus 1a, an electrical conductivity measuring apparatus 1b, and a concentration measuring apparatus 1c. The pH measuring apparatus 1a, the electrical conductivity measuring apparatus 1b, and the concentration measuring apparatus 1c are examples of the plurality of measuring apparatuses.

The pH measuring apparatus 1a measures pH of the absorption liquid in the carbon dioxide capturing apparatus 1 and outputs a signal including a measured value of the pH to the information processing apparatus 2 via a transmission line. For example, the pH measuring apparatus 1a measures the pH of the absorption liquid present in a device (for example, in the absorber 13 or the regenerator 16) of the carbon dioxide capturing apparatus 1 or the pH of the absorption liquid flowing in a flow path (for example, in the flow path L1 or the flow path L2) of the carbon dioxide capturing apparatus 1. This makes it possible to measure the pH of the absorption liquid being used in the carbon dioxide capturing apparatus 1 by an online measurement.

The electrical conductivity measuring apparatus 1b measures electrical conductivity of the absorption liquid in the carbon dioxide capturing apparatus 1 and outputs a signal including a measured value of the electrical conductivity to the information processing apparatus 2 via a transmission line. For example, the electrical conductivity measuring apparatus 1b measures the electrical conductivity of the absorption liquid present in a device (for example, in the absorber 13 or the regenerator 16) of the carbon dioxide capturing apparatus 1 or the electrical conductivity of the absorption liquid flowing in a flow path (for example, in the flow path L1 or the flow path L2) of the carbon dioxide capturing apparatus 1. This makes it possible to measure the electrical conductivity of the absorption liquid being used in the carbon dioxide capturing apparatus 1 by an online measurement.

The concentration measuring apparatus 1c measures the carbon dioxide concentration of the absorption liquid in the carbon dioxide capturing apparatus 1 and outputs a signal including a measured value of the carbon dioxide concentration to the information processing apparatus 2 via a transmission line. Specifically, the concentration measuring apparatus 1c measures concentration of the carbon dioxide dissolved in the absorption liquid. For example, the concentration measuring apparatus 1c measures the carbon dioxide concentration of the absorption liquid present in a device (for example, in the absorber 13 or the regenerator 16) of the carbon dioxide capturing apparatus 1 or the carbon dioxide concentration of the absorption liquid flowing in a flow path (for example, in the flow path L1 or the flow path L2) of the carbon dioxide capturing apparatus 1. This makes it possible to measure the carbon dioxide concentration of the absorption liquid being used in the carbon dioxide capturing apparatus 1 by an online measurement. The concentration measuring apparatus 1c is, for example, a total organic carbon (TOC) meter.

### [Information processing apparatus 2]

The information processing apparatus 2 executes various kinds of information processing related to the carbon dioxide capturing system of the present embodiment. An example of the information processing apparatus 2 is a computer such as a PC (Personal Computer) or a WS (Work Station). The information processing apparatus 2 may be arranged outside of the carbon dioxide capturing apparatus 1 as in FIG. 2 or, alternatively, arranged in the carbon dioxide capturing apparatus 1. For example, the information processing apparatus 2 may be the control apparatus 25 illustrated in FIG. 1 or an apparatus that differs from the control apparatus 25 illustrated in FIG. 1.

As illustrated in FIG. 2, the information processing apparatus 2 includes a computing module 2a, a communication module 2b, a display module 2c, and an input module 2d. For example, the computing module 2a includes a CPU (Central Processing Unit), a ROM (Read Only Memory), a RAM (Random Access Memory), and an HDD (Hard Disk Drive). For example, the communication module 2b includes a communication interface for communicating with an apparatus other than the information processing apparatus 2 in a wired or wireless manner and a memory interface for inserting a recording medium such as a semiconductor memory. For example, the display module 2c includes a liquid crystal display or an indicator. For example, the input module 2d includes a keyboard or a mouse.

The communication module 2b receives, via a transmission line, a signal including a measured value of the pH, a signal including a measured value of the electrical conductivity, and a signal including a measured value of the carbon dioxide concentration. The computing module 2a acquires measured values of the pH, the electrical conductivity, and the carbon dioxide concentration from the communication module 2b.

Based on the acquired pH, electrical conductivity, and carbon dioxide concentration, the computing module 2a controls an operation of the absorption liquid refining apparatus 3. Specifically, based on the pH, the electrical conductivity, and the carbon dioxide concentration, the computing module 2a calculates concentration of an acid component in the absorption liquid and controls an operation of the absorption liquid refining apparatus 3 based on the calculated concentration of the acid component. This makes it possible to measure (calculate) the acid component concentration in the absorption liquid being used in the carbon dioxide capturing apparatus 1 by an online measurement in a short time and to determine a control policy of the absorption liquid refining apparatus 3 based on the acid component concentration in a short time.

The computing module 2a of the present embodiment stores an expression or a table for calculating the acid component concentration from the pH, the electrical conductivity, and the carbon dioxide concentration in the HDD in advance and calculates the acid component concentration based on the expression or the table. This makes it possible to calculate the acid component concentration in a short time with a simple calculation. The computing module 2a may store information other than the expression or the table in the HDD in advance for calculating the acid component concentration as long the acid component concentration can be calculated in a short time in a similar manner to the expression or the table. In addition, a calculated value of the acid component concentration by the computing module 2a may be a value with a high theoretical accuracy or a value corresponding to an estimated value that may include error.

The display module 2c includes a screen S for displaying various kinds of information as illustrated in FIG. 2. When the computing module 2a of the present embodiment calculates the acid component concentration based on the pH, the electrical conductivity, and the carbon dioxide concentration, the computing module 2a outputs the calculated acid component concentration to the display module 2c. As illustrated in FIG. 2, the display module 2c displays the acid component concentration on the screen S. This makes it possible to notify a manager of the carbon dioxide capturing system of the acid component concentration. The acid component concentration can be displayed by numerals and characters as illustrated in FIG. 2 or, alternatively, displayed by a graphic (such as a graph). In addition, the computing module 2a may generate information (for example, a warning to the manager) other than the acid component concentration based on the pH, the electrical conductivity, and the carbon dioxide concentration and the display module 2c may display this information on the screen S. This information is an example of the predetermined information. The computing module 2a may remotely display the acid component concentration or other information on a screen of an apparatus other than the information processing apparatus 2.

For example, the input module 2d is used by the manager to input information related to an amine component and/or an acid component in the absorption liquid to the information processing apparatus 2. An example of the information related to the amine component is information related to a type of amine contained in the amine component or information related to concentrations of various types of amine contained in the amine component. An example of the information related to the acid component is information related to a type of acid contained in the acid component or information related to a content ratio of a plurality of types of acids contained in the acid component. For example, the manager inputs types of organic acids and inorganic acids that are expected to be accumulated in the absorption liquid and a content ratio of the organic acids and the inorganic acids in the absorption liquid to the information processing apparatus 2 in advance. The information inputted by the manager is saved in the HDD. The computing module 2a of the present embodiment calculates (estimates) the acid component concentration based on the pH, the electrical conductivity, and the carbon dioxide concentration acquired from the communication module 2b and the information (for example, types and concentrations of the amine component and types and content ratio of the acid component) that is saved in the HDD using the input module 2d. This makes it possible to calculate the acid component concentration of the absorption liquid even when various acids are contained in the absorption liquid. The information saved in the HDD by the manager may be modifiable by the manager at any timing.

The information processing described above and described later that is performed by the information processing apparatus 2 is realized by, for example, a computer program. For example, a function of the information processing apparatus 2 of performing the information processing may be realized by installing a computer program recorded on a recording medium such as a non-volatile memory on the information processing apparatus 2. In addition, the computer program may be installed on the information processing apparatus 2 by being downloaded to the information processing apparatus 2 through a network. The computer program is an example of the carbon dioxide capturing program.

Next, further details of the pH, the electrical conductivity, and the carbon dioxide concentration of the absorption liquid in the carbon dioxide capturing apparatus 1 will be described.

Studies revealed that the acid component concentration of an absorption liquid can be calculated using a measured value of the pH of the absorption liquid. When the acid component concentration of the absorption liquid is to be measured by ion chromatography, the acid component concentration is generally measured by an offline measurement. On the other hand, the pH of the absorption liquid can be measured by an online measurement using the pH measuring apparatus 1a. This makes it possible to calculate the acid component concentration of the absorption liquid from the pH of the absorption liquid and to measure the acid component concentration in a short time by an online calculation. The present embodiment makes it possible to control the absorption liquid refining apparatus 3 in real time based on the acid component concentration by calculating the acid component concentration from the pH.

The same holds for the electrical conductivity and the carbon dioxide concentration. Studies revealed that the acid component concentration of an absorption liquid can be calculated using a measured value of the electrical conductivity of the absorption liquid or calculated using a measured value of the carbon dioxide concentration of the absorption liquid. The present embodiment makes it possible to control the absorption liquid refining apparatus 3 in real time based on the acid component concentration by calculating the acid component concentration from the electrical conductivity. In a similar manner, the present embodiment makes it possible to control the absorption liquid refining apparatus 3 in real time based on the acid component concentration by calculating the acid component concentration from the carbon dioxide concentration.

However, the pH of the absorption liquid not only changes according to the acid component concentration of the absorption liquid but also changes according to the amine component concentration of the absorption liquid. In a similar manner, the electrical conductivity of the absorption liquid not only changes according to the acid component concentration of the absorption liquid but also changes according to the amine component concentration of the absorption liquid. Therefore, when the acid component concentration is calculated solely based on the pH or when the acid component concentration is calculated solely based on the electrical conductivity, there is a risk that the calculated acid component concentration is inaccurate.

In consideration thereof, in the present embodiment, the acid component concentration is calculated based on the pH and the electrical conductivity. Studies revealed that a manner in which the pH changes according to the amine component concentration and a manner in which the electrical conductivity changes according to the amine component concentration differ from each other. Therefore, by calculating the acid component concentration based on the pH and the electrical conductivity, the present embodiment makes it possible to reduce an effect of the amine component concentration with respect to a calculated value of the acid component concentration and to increase accuracy of the calculated acid component concentration.

In a similar manner, the carbon dioxide concentration of the absorption liquid is also affected by the amine component concentration in the absorption liquid. This is because the function of the absorption liquid of absorbing carbon dioxide is mainly attributable to the amine in the absorption liquid. The present embodiment makes it possible to further increase the accuracy of the calculated acid component concentration by calculating the acid component concentration based on the pH, the electrical conductivity, and the carbon dioxide concentration.

As described above, the input module 2d is used by the manager to input information related to the amine component and/or the acid component in the absorption liquid to the information processing apparatus 2, and the computing module 2a calculates the acid component concentration based on the pH, the electrical conductivity, and the carbon dioxide concentration acquired from the communication module 2b and the information that is saved in the HDD using the input module 2d. The present embodiment makes it possible to further increase the accuracy of the calculated acid component concentration by calculating the acid component concentration based on the information related to the amine component in the absorption liquid.

While the acid component concentration of the present embodiment is calculated based on the pH, the electrical conductivity, and the carbon dioxide concentration, alternatively, the acid component concentration may be calculated based only on any two of the pH, the electrical conductivity, and the carbon dioxide concentration. For example, the acid component concentration of the present embodiment may be calculated using the pH and the electrical conductivity and without using the carbon dioxide concentration. In this case, the carbon dioxide capturing apparatus 1 need not include the concentration measuring apparatus 1c.

Carbon dioxide (CO₂) is an acid in a similar manner to SOₓ and NOₓ. Therefore, the acid component concentration that is calculated in the present embodiment may be the concentration of the acid component containing carbon dioxide. In this case, the acid component concentration is a sum of the carbon dioxide concentration and the concentration of the acid component excluding carbon dioxide. On the other hand, the acid component concentration that is calculated in the present embodiment may be the concentration of the acid component excluding carbon dioxide.

### [Absorption liquid refining apparatus 3]

The absorption liquid refining apparatus 3 is connected to the carbon dioxide capturing apparatus 1 by a flow path P for transferring an absorption liquid. The absorption liquid refining apparatus 3 introduces a part of the absorption liquid being used in the carbon dioxide capturing apparatus 1 via the flow path P and refines the introduced absorption liquid. According to the present embodiment, a deterioration product is removed from the absorption liquid by refining the absorption liquid. Subsequently, the absorption liquid refining apparatus 3 feeds the refined absorption liquid to the carbon dioxide capturing apparatus 1 via the flow path P. In this manner, the refined absorption liquid is returned to the carbon dioxide capturing apparatus 1. The flow path P may separately include a flow path that is oriented from the carbon dioxide capturing apparatus 1 toward the absorption liquid refining apparatus 3 and a flow path that is oriented from the absorption liquid refining apparatus 3 toward the carbon dioxide capturing apparatus 1.

An operation of the absorption liquid refining apparatus 3 is preferably controlled according to concentrations of organic acids and inorganic acids accumulated in the absorption liquid. In consideration thereof, the computing module 2a of the present embodiment calculates the acid component concentration of the absorption liquid based on the pH, the electrical conductivity, and the carbon dioxide concentration of the absorption liquid and controls an operation of the absorption liquid refining apparatus 3 via the communication module 2b based on the calculated acid component concentration. In FIG. 2, a signal for controlling the absorption liquid refining apparatus 3 is outputted to the absorption liquid refining apparatus 3 from the communication module 2b via a transmission line.

The computing module 2a may determine a control content of the absorption liquid refining apparatus 3 (for example, start of operation or stop of operation of the absorption liquid refining apparatus 3) based on the acid component concentration and output a signal indicating the control content to the absorption liquid refining apparatus 3 or, alternatively, output a signal including the acid component concentration itself to the absorption liquid refining apparatus 3. In the case of the former, a controller in the absorption liquid refining apparatus 3 controls the start of operation or the stop of operation of the absorption liquid refining apparatus 3 based on the control content indicated by the signal. In the case of the latter, the controller in the absorption liquid refining apparatus 3 determines the control content of the absorption liquid refining apparatus 3 (for example, start of operation or stop of operation of the absorption liquid refining apparatus 3) based on the acid component concentration indicated by the signal and controls the start of operation or the stop of operation of the absorption liquid refining apparatus 3 based on the control content. In the case of the latter, not only the information processing apparatus 2 but the controller in the absorption liquid refining apparatus 3 also corresponds to an example of the information processing apparatus that controls the absorption liquid refining apparatus 3.

In the following description, the control content of the absorption liquid refining apparatus 3 is assumed to be determined by the computing module 2a. However, the following description is similarly applicable to a case where the control content of the absorption liquid refining apparatus 3 is determined by the controller in the absorption liquid refining apparatus 3.

For example, the computing module 2a compares the acid component concentration and a reference value with each other and controls the absorption liquid refining apparatus 3 based on a result of the comparison. The reference value is to be saved in advance in the HDD in the computing module 2a. For example, when the acid component concentration is higher than the reference value, an operation of the absorption liquid refining apparatus 3 is started. During the operation of the absorption liquid refining apparatus 3, the absorption liquid refining apparatus 3 introduces an absorption liquid from the carbon dioxide capturing apparatus 1, refines the introduced absorption liquid, and returns the refined absorption liquid to the carbon dioxide capturing apparatus 1. On the other hand, when the acid component concentration is lower than the reference value, the operation of the absorption liquid refining apparatus 3 is stopped. When the operation of the absorption liquid refining apparatus 3 is stopped, the absorption liquid refining apparatus 3 neither introduces nor refines the absorption liquid.

The computing module 2a may control the absorption liquid refining apparatus 3 so that the absorption liquid remaining in the absorption liquid refining apparatus 3 is discharged to the carbon dioxide capturing apparatus 1 via the flow path P after stop of operation of the absorption liquid refining apparatus 3. This makes it possible to avoid a situation where the absorption liquid before being refined or after being refined continues to remain in the absorption liquid refining apparatus 3.

When the control content of the absorption liquid refining apparatus 3 is determined by the controller in the absorption liquid refining apparatus 3, the reference value may be saved in advance in the absorption liquid refining apparatus 3 or the reference value having been saved in advance in the HDD of the computing module 2a may be provided to the absorption liquid refining apparatus 3 by being attached to the signal described above.

Next, further details of the configuration of the absorption liquid refining apparatus 3 will be described.

As a method of refining an absorption liquid, the absorption liquid refining apparatus 3 can adopt a distillation method, an electrodialysis method, an ion exchange method, or the like. These methods are capable of removing a heat-stable amine salt from the absorption liquid.

The distillation method has an advantage in that both ionic deteriorated matter (an organic acid, an inorganic acid, or the like) and non-ionic deteriorated matter (amine generated by decomposition of the original amine) can be removed. However, the distillation method has a disadvantage in that deterioration of a predetermined amine (for example, high-boiling amine) due to heat is readily promoted. In addition, the distillation method tends to increase cost in a case of distillation under reduced pressure.

The electrodialysis method and the ion exchange method have an advantage in that the methods can be operated relatively easily and that the issue of high-boiling amine can also be accommodated. However, the electrodialysis method and the ion exchange method have a disadvantage in that non-ionic deteriorated matter cannot be removed. In addition, the electrodialysis method has a problem in that the method is unsuitable when the carbon dioxide concentration of the absorption liquid is high and a problem in that removal efficiency tends to decline when concentration of the deteriorated matter to be removed is low. On the other hand, the ion exchange method has a problem in that the method is unsuitable when the carbon dioxide concentration of the absorption liquid is high in a similar manner to the electrodialysis method and a problem in that a need for large amounts of water and chemicals for regenerating an ion exchange resin tends to increase an amount of drainage as industrial waste.

However, according to the present embodiment, since an operation period of the absorption liquid refining apparatus 3 can be automatically managed by any reference value, an optimal operation of the absorption liquid refining apparatus 3 can be realized regardless of which of the methods is to be adopted. For example, an operation in a low-efficiency state can be avoided, excessive promotion of deterioration and excessive drainage can be suppressed, and operation costs such as labor costs can be reduced.

As described above, the carbon dioxide capturing system of the present embodiment measures the pH, the electrical conductivity, and the carbon dioxide concentration of the absorption liquid in the carbon dioxide capturing apparatus 1 and calculates the acid component concentration and controls the absorption liquid refining apparatus 3 based on the pH, the electrical conductivity, and the carbon dioxide concentration. Therefore, the present embodiment makes it possible to suitably perform measurements related to an absorption liquid such as measuring the pH, the electrical conductivity, and the carbon dioxide concentration of the absorption liquid by an online measurement and suitably calculating the acid component concentration and controlling the absorption liquid refining apparatus 3 based on the online measurement.

### (Second embodiment)

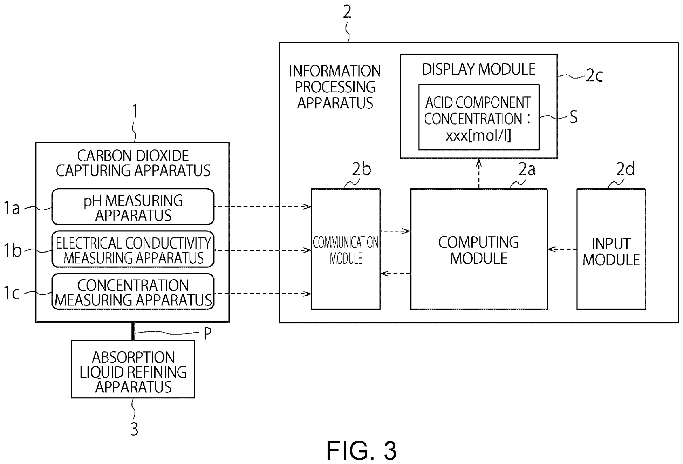

FIG. 3 is a block diagram illustrating a configuration of a carbon dioxide capturing system of a second embodiment.

The carbon dioxide capturing system of the present embodiment includes components similar to those of the carbon dioxide capturing system of the first embodiment. However, whereas the absorption liquid refining apparatus 3 of the first embodiment is automatically controlled by the information processing apparatus 2, the absorption liquid refining apparatus 3 of the present embodiment is manually controlled by a manager of the carbon dioxide capturing system.

In the present embodiment, the manager views the acid component concentration displayed on the screen S of the display module 2c. Based on the acid component concentration, the manager controls an operation of the absorption liquid refining apparatus 3. For example, when the acid component concentration is higher than a reference value, the manager operates the absorption liquid refining apparatus 3 so that an operation of the absorption liquid refining apparatus 3 is started. On the other hand, when the acid component concentration is lower than the reference value, the manager operates the absorption liquid refining apparatus 3 so that an operation of the absorption liquid refining apparatus 3 is stopped. The reference value may be displayed on the screen S of the display module 2c. In addition, the manager may control an operation of the absorption liquid refining apparatus 3 without using the reference value. Furthermore, the manager may control an operation of the absorption liquid refining apparatus 3 based on the warning described above that is displayed on the screen S of the display module 2c.

The present embodiment makes it possible to suitably perform measurements related to an absorption liquid such as measuring the pH, the electrical conductivity, and the carbon dioxide concentration of the absorption liquid by an online measurement and suitably calculating the acid component concentration and controlling the absorption liquid refining apparatus 3 based on the online measurement. In the present embodiment, the calculation of the acid component concentration is automatically performed while control of the absorption liquid refining apparatus 3 is performed manually.

### (Third embodiment)

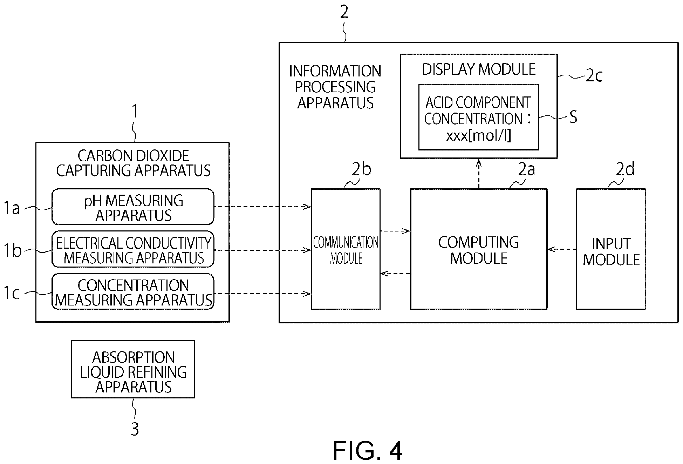

FIG. 4 is a block diagram illustrating a configuration of a carbon dioxide capturing system of a third embodiment.

The carbon dioxide capturing system of the present embodiment includes components similar to those of the carbon dioxide capturing system of the second embodiment. However, whereas the transfer of the absorption liquid between the carbon dioxide capturing apparatus 1 and the absorption liquid refining apparatus 3 of the second embodiment is automatically performed, the transfer of the absorption liquid between the carbon dioxide capturing apparatus 1 and the absorption liquid refining apparatus 3 of the present embodiment is manually performed.

When the acid component concentration displayed on the screen S is higher than a reference value, a manager of the present embodiment transfers a part of the absorption liquid in the carbon dioxide capturing apparatus 1 to the absorption liquid refining apparatus 3. The transfer may be performed by any means and, for example, the transfer may be performed by the manager by opening a valve between the carbon dioxide capturing apparatus 1 and the absorption liquid refining apparatus 3 or by arranging for transporting means by the manager to carry the absorption liquid from the carbon dioxide capturing apparatus 1 to the absorption liquid refining apparatus 3. Subsequently, the manager starts an operation of the absorption liquid refining apparatus 3 and refines an absorption liquid with the absorption liquid refining apparatus 3. The absorption liquid refined by the absorption liquid refining apparatus 3 is transferred to the carbon dioxide capturing apparatus 1 in a similar manner to the transfer described above.

On the other hand, when the acid component concentration displayed on the screen S is lower than the reference value, the manager of the present embodiment stops the operation of the absorption liquid refining apparatus 3. In this case, the manager may discharge the absorption liquid that remains in the absorption liquid refining apparatus 3 to the carbon dioxide capturing apparatus 1 after stop of operation of the absorption liquid refining apparatus 3. The discharge can be performed in a similar manner to the transfer described above.

The present embodiment makes it possible to suitably perform measurements related to an absorption liquid such as measuring the pH, the electrical conductivity, and the carbon dioxide concentration of the absorption liquid by an online measurement and suitably calculating the acid component concentration and controlling the absorption liquid refining apparatus 3 based on the online measurement. In the present embodiment, the calculation of the acid component concentration is automatically performed while control of the absorption liquid refining apparatus 3 is performed manually.

The absorption liquid refining apparatus 3 of the present embodiment may be arranged outside the carbon dioxide capturing system instead of in the carbon dioxide capturing system. In addition, refining of the absorption liquid of the present embodiment may be performed without using the absorption liquid refining apparatus 3. For example, refining of the absorption liquid of the present embodiment may be performed by a facility of some sort that is capable of implementing the distillation method, the electrodialysis method, or the ion exchange method described above.

In addition, the information processing apparatus 2 of the first to third embodiments may be an information device other than a PC or a WS and may be, for example, a mobile device such as a tablet device. For example, by carrying the mobile device to a site of carbon dioxide capture, the manager of the second or third embodiment can assess the acid component concentration using the mobile device on the site of carbon dioxide capture and manually control the absorption liquid refining apparatus 3 while viewing the acid component concentration on site.

While certain embodiments have been described, these embodiments have been presented by way of example only, and are not intended to limit the scope of the inventions. Indeed, the novel systems, methods and programs described herein may be embodied in a variety of other forms; furthermore, various omissions, substitutions and changes in the form of the systems, methods and programs described herein may be made without departing from the spirit of the inventions. The accompanying claims and their equivalents are intended to cover such forms or modifications as would fall within the scope and spirit of the inventions.

## Claims

1. A carbon dioxide capturing system comprising:
an absorber configured to bring a treatment object gas including carbon dioxide and an absorption liquid including an amine-based compound into contact with each other, and cause the absorption liquid to absorb the carbon dioxide;
a regenerator configured to heat the absorption liquid having absorbed the carbon dioxide, and cause the carbon dioxide to be released from the absorption liquid;
a plurality of measuring apparatuses provided in a carbon dioxide capturing apparatus including the absorber and the regenerator, the plurality of measuring apparatuses including two or more of a pH measuring apparatus, an electrical conductivity measuring apparatus, and a concentration measuring apparatus that respectively configured to measure pH, electrical conductivity, and carbon dioxide concentration of the absorption liquid in the carbon dioxide capturing apparatus;
an absorption liquid refining apparatus configured to refine the absorption liquid introduced from the carbon dioxide capturing apparatus, and feed the refined absorption liquid to the carbon dioxide capturing apparatus; and
an information processing apparatus configured to control the absorption liquid refining apparatus, based on two or more of the pH, the electrical conductivity, and the carbon dioxide concentration.

2. The system of Claim 1, wherein
the plurality of measuring apparatuses include the pH measuring apparatus, the electrical conductivity measuring apparatus, and the concentration measuring apparatus, and
the information processing apparatus controls the absorption liquid refining apparatus, based on the pH, the electrical conductivity, and the carbon dioxide concentration.

3. The system of Claim 1, wherein
the information processing apparatus calculates concentration of an acid component in the absorption liquid based on two or more of the pH, the electrical conductivity, and the carbon dioxide concentration, and controls the absorption liquid refining apparatus based on the concentration of the acid component.

4. The system of Claim 3, wherein
the information processing apparatus calculates the concentration of the acid component, based on two or more of the pH, the electrical conductivity, and the carbon dioxide concentration and information related to the amine-based compound and/or the acid component having been inputted to the information processing apparatus.

5. The system of Claim 4, wherein
the information related to the amine-based compound is information related to a type or concentration of the amine-based compound, and
the information related to the acid component is information related to a type of acid included in the acid component, or information related to a content ratio of a plurality of types of acids included in the acid component.

6. The system of Claim 3, wherein
the information processing apparatus compares the concentration of the acid component and a reference value to each other, and controls the absorption liquid refining apparatus based on a result of the comparison.

7. The system of Claim 3, wherein
the information processing apparatus controls a start of operation and/or a stop of operation of the absorption liquid refining apparatus, based on the concentration of the acid component.

8. The system of Claim 7, wherein
the information processing apparatus controls the absorption liquid refining apparatus so that the absorption liquid remaining in the absorption liquid refining apparatus is discharged to the carbon dioxide capturing apparatus after the stop of operation of the absorption liquid refining apparatus.

9. The system of Claim 1, wherein
the information processing apparatus is a control apparatus that controls the carbon dioxide capturing apparatus.

10. The system of Claim 1, wherein
the information processing apparatus generates predetermined information based on two or more of the pH, the electrical conductivity, and the carbon dioxide concentration, and displays the predetermined information on a screen.

11. The system of Claim 10, wherein
the information processing apparatus calculates concentration of an acid component in the absorption liquid based on two or more of the pH, the electrical conductivity, and the carbon dioxide concentration, and displays the concentration of the acid component on the screen.

12. A carbon dioxide capturing method comprising:
bringing a treatment object gas including carbon dioxide and an absorption liquid including an amine-based compound into contact with each other by using an absorber, and causing the absorption liquid to absorb the carbon dioxide;
heating the absorption liquid having absorbed the carbon dioxide by using a regenerator, and causing the carbon dioxide to be released from the absorption liquid;
measuring two or more of pH, electrical conductivity, and carbon dioxide concentration of the absorption liquid in a carbon dioxide capturing apparatus including the absorber and the regenerator, by using a plurality of measuring apparatuses that are provided in the carbon dioxide capturing apparatus, the plurality of measuring apparatuses including two or more of a pH measuring apparatus, an electrical conductivity measuring apparatus, and a concentration measuring apparatus; and
calculating concentration of an acid component in the absorption liquid by using an information processing apparatus, based on two or more of the pH, the electrical conductivity, and the carbon dioxide concentration.

13. The method of Claim 12, further comprising:
controlling, based on the concentration of the acid component, an absorption liquid refining apparatus that refines the absorption liquid introduced from the carbon dioxide capturing apparatus and feeds the refined absorption liquid to the carbon dioxide capturing apparatus.

14. The method of Claim 13, wherein
the absorption liquid refining apparatus is controlled by the information processing apparatus based on the concentration of the acid component.

15. A carbon dioxide capturing program that causes an information processing apparatus to execute information processing related to a carbon dioxide capturing system including:
an absorber configured to bring a treatment object gas including carbon dioxide and an absorption liquid including an amine-based compound into contact with each other, and cause the absorption liquid to absorb the carbon dioxide;
a regenerator configured to heat the absorption liquid having absorbed the carbon dioxide, and cause the carbon dioxide to be released from the absorption liquid;
a plurality of measuring apparatuses provided in a carbon dioxide capturing apparatus including the absorber and the regenerator, the plurality of measuring apparatuses including two or more of a pH measuring apparatus, an electrical conductivity measuring apparatus, and a concentration measuring apparatus that respectively configured to measure pH, electrical conductivity, and carbon dioxide concentration of the absorption liquid in the carbon dioxide capturing apparatus; and
an absorption liquid refining apparatus configured to refine the absorption liquid introduced from the carbon dioxide capturing apparatus, and feed the refined absorption liquid to the carbon dioxide capturing apparatus,
wherein the information processing comprises:
calculating concentration of an acid component in the absorption liquid, based on two or more of the pH, the electrical conductivity, and the carbon dioxide concentration; and
controlling the absorption liquid refining apparatus, based on the concentration of the acid component.
